# EUROPEAN PATENT APPLICATION

(11) **EP 4 703 822 A1**
(43) Date of publication of application: **04.03.2026**
(21) Application number: 24196774.4
(22) Date of filing: 27.08.2024
(51) Int. Cl.: G05B 19/418

(54) **METHOD OF TRANSMITTING TIME-CRITICAL DATA WITHIN AN INDUSTRIAL AUTOMATION SYSTEM AND NETWORK MANAGEMENT SYSTEM**

(71) Applicant: Siemens Aktiengesellschaft, 80333 München (DE)
(72) Inventor: Varastehhajipour, Amir, 81379 München (DE); Deric, Nemanja, 80807 München (DE)
(74) Representative: Siemens Patent Attorneys

(57) **Abstract**

The invention relates to transmitting time-critical data within an industrial automation system in which a plurality of redundant control applications (111-113) generating control commands to be executed by associated automation devices (101) is provided by means of software containers each running in a runtime environment or by means of a virtual machine. At least one network proxy (132) aggregates control commands from redundant control applications (111-113) into resulting control messages (1) and transmits the control messages to the automation devices (101) via a network (130) of the industrial automation system. In response to the control messages (1), the at least one network proxy (132) receives status messages (2) from the automation devices (101), multiplexes the status messages, and forwards duplicates thereof to the associated redundant control applications (111-113). For for a plurality of possible locations of the at least one network proxy (132) within the network (130) and for a plurality of network usage scenarios, delays and/or path costs occurring when transmitting said control (1) and status messages (2) are simulated. One of the plurality of locations providing for optimal delays, paths costs and/or a combination thereof in the plurality of network usage scenarios is selected for placing the at least one network proxy (132). An execution of the control applications (111-113) is assigned to selected available hosts (121-123) in the network (130) depending on the delays, paths costs and/or the combination thereof.

## Description

The present invention relates to a method of transmitting time-critical data within an industrial automation system, particularly comprising a time-sensitive or real-time network, and a network management system for an industrial automation system.

Industrial automation systems are designed to monitor and control technical processes, particularly for factory, process or building automation, and provide for operating control devices, sensors, machines, and industrial plants autonomously and substantially independent from human intervention. Usually, industrial automation systems comprise a plurality of automation devices interconnected with each other via an industrial communication network. Due to a continuously growing impact of information technology on industrial automation systems, approaches for reliably providing monitoring and control functions within industrial automation systems gain increasing importance. Challenges experienced in industrial automation systems frequently result from message traffic with many messages which are relatively short.

Generally, interruptions of communication connections might cause an unfavourable repetition of transmission of messages. Again, this usually results in additional loads on communication connections, which may further lead to malfunctions or system faults. If messages are not transmitted at all or not transmitted completely, an industrial automation system may be prevented from changing into a safe operating state or from remaining in such a safe operating state. Finally, this may lead to a costly outage of an entire production system.

In EP 3 881 506 B1, a method for operating a communication system having redundant routers is described, wherein datagrams are forwarded within the communication system from source communication devices to destination communication devices by routers based on routing information stored in routing tables of the routers.

According to EP 3 881 506 B1, within a communication system having redundant routers, datagrams are forwarded from source communication devices to target communication devices by means of routers based on routing information stored in routing tables of the routers. For each end device, a virtual router is configured as a default gateway. The virtual router is associated with a group of several routers. Routers from the same group select among themselves a router operated as the active default gateway. The routers not operated as the active default gateway are operated as reserve gateways. The reserve gateways request from the active default gateway a transmission of stored address associations between data link layer addresses and network layer addresses of all detected communication devices. Only upon request, the active default gateway transmits all stored address associations in bundled form to a requesting reserve gateway. The reserve gateways update their respective configuration based on the address associations transmitted by the active default gateway directly and without waiting for results from a training process carried out by themselves. In case of a failure of the active default gateway and selecting a new active default gateway, the new active default gateway takes over all address associations transmitted before the failure and a virtual data link layer address assigned to the virtual router for its operation as new active default gateway.

The older European patent application EP24174540.5 relates to a system for controlling a field device, wherein the system comprises a server pool comprising servers for operating instances of a virtual control application. The system comprises a network proxy device, configured to receive a status update message from the field device, comprising status data, and to send replicated status update messages comprising the status data to each instance of the virtual control application assigned to the field device. The network proxy device is configured to receive respective control response messages of each of the instances of the virtual control application and to perform a consensus-based decision-making procedure to evaluate consensus control data based on the control data provided by the instances of the virtual control application and to send a control response message comprising the consensus control data to the field device.

From the older European patent application EP24189224.9, a method is known for migrating an industrial control process from a source instance of the industrial control process, or source control process, to a destination instance of the industrial control process, or destination control process. This involves the use of a network proxy representative of the industrial control process during the transfer process to intervene and control at least one device within one or more production cells. The network proxy may intervene in an active connection between a source control process and the at least one industrial device, transparently forwarding messages exchanged between them. Subsequently, a second passive connection may be established between a destination control process and the network proxy. This connection may be used to transparently forward duplicate messages exchanged between the network proxy and the at least one industrial device to the destination control process. Subsequently, the previous active connection may be converted into a passive one, executing both source and destination industrial control processes synchronously while synchronizing their internal operational states. Subsequently, the connection of the industrial device to the destination industrial control process may be handed over by converting the second passive connection between the destination industrial control process and the network proxy into an active connection extending from the destination industrial control process to the industrial device, the destination industrial control process assuming control over the industrial device.

In above state-of-the-art solutions, network proxy instances are created and managed manually. Moreover, there is no optimized assignment of network intents to the network proxies. Decisions for such an assignment are usually made in a static manner by a network and/or system operator. This may lead to a system operating in an under-performing way. Particularly, if a network proxy is placed to close to automation devices to be controller, e.g. IO devices (input/output), bandwidth usage will increase, whereas placing it to close to virtualized control applications, e.g. vPLCs (virtual programmable logic controller), will be detrimental to load balancing. Moreover, after determining appropriate locations of network proxies, paths connecting automation devices to be controlled on the one hand and virtualized control applications on the other hand must be found making efficiently use of available network resources.

The present invention is based on the problem of realizing a reliable and efficient method for interconnecting redundant control applications within an industrial automation system with automation devices controlled by these control applications, and providing appropriate means to implement the method.

This problem is solved according to the present invention by means of a method having the features specified in claim 1 and by means of a network management system having the features specified in claim 14. Advantageous embodiments of the present invention are specified in the dependent patent claims.

According to the present invention, a method of transmitting time-critical data within an industrial automation system is provided. The method comprises providing, by means of software containers each running in a runtime environment or by means of a virtual machine, a plurality of redundant control applications generating control commands to be executed by associated automation devices. By at least one network proxy, control commands from redundant control applications are aggregated into resulting control messages, and the control messages are transmitted to the automation devices via a network of the industrial automation system. The at least one network proxy receives status messages from the automation devices in response to the control messages, multiplexes the status messages, and forwards duplicates thereof to the associated redundant control applications.

Moreover, the method according to the present invention comprises simulating, for a plurality of possible locations of the at least one network proxy within the network and for a plurality of network usage scenarios, delays and/or path costs occurring when transmitting said control and status messages. Furthermore, the method comprises selecting, for placing the at least one network proxy, one of the plurality of locations providing for optimal delays, paths costs and/or a combination thereof in the plurality of network usage scenarios. Finally, the method comprises assigning an execution of the control applications to selected available hosts in the network depending on the delays, paths costs and/or the combination thereof.

By means of above method, inefficiencies of previous network proxy solutions can be resolved to further improve network efficiency, especially in terms of performance and resource costs. Besides, the present invention allows for reduced computational costs, and significantly increases network reliability, especially for deploying control applications, e.g., vPLCs, on cloud- or edge-based solutions.

Preferably, the control applications are each provided by way of at least one runtime component that can be loaded into a runtime environment installed on a host and executed accordingly. The runtime components run, isolated from each other, within the runtime environment and share an operating system kernel of the respective host. In particular, the runtime components may be containers, such as Docker containers, WebAssembly or Java bytecode, whereas the runtime environment may be a container runtime environment, such as a Docker Engine, a WebAssembly runtime environment or a Java virtual machine. Preferably, the runtime environment is used to create, delete or link virtual resources. The virtual resources are not limited to containers only, but also may comprise virtual communication networks and connections assigned thereto.

Moreover, the runtime components may also comprise container groups, for example pods. Generally, alternative micro-virtualization concepts, such as snaps, or orchestrated container runtime environments, such as podman or Kubernetes, may also be used for implementing the runtime components. Stored images for containers may be retrieved for example from a storage and provision system accessible in read and/or write mode by a multiplicity of users.

According to a preferred embodiment of the present invention, a digital twin of the network is generated during a network planning phase. By means of the digital twin, the delays and/or path costs are simulated for the plurality of possible locations of the at least one network proxy and the plurality of network usage scenarios. Therefore, the at least one network proxy can be efficiently placed at the selected location during the network planning phase. The digital twin of the network may be generated by means of a network topology scan and querying attributes and/or types of network devices detected during the network topology scan. Particularly, the digital twin can be used for checking whether requirements from specified network intents are satisfied and/or for verifying network simulation results. Network intents relate to intent-based networking (IBN) which is a form of network administration that can incorporate artificial intelligence (Al), network orchestration and machine learning (ML) to automate administrative tasks across a network. The goal of IBN is to reduce the complexity of creating, managing and enforcing network policies and reduce the manual labor associated with traditional configuration management (see https://www.techtarget.com/whatis/definition/intent-based-networking-IBN). Particularly, an IBN management application can determine which devices and routes match intentions specified by a network or system operator and make appropriate configuration changes automatically.

According to yet another preferred embodiment of the present invention, for assigning the execution of the control applications to available hosts, the optimal delays, paths costs and/or the combination thereof are/is determined by means of an artificial intelligence model. The artificial intelligence model is derived from solving an optimization function for the delays and/or paths costs in a plurality of simulated network usage scenarios. Preferably, the simulated network usage scenarios comprise providing predetermined control applications by predetermined hosts arranged at predetermined locations in the network. The simulated network usage scenarios may additionally comprise providing the predetermined control applications by the selected hosts via predetermined network proxies arranged at predetermined locations in the network. This provides for an improved accuracy when training the artificial intelligence model.

Above optimization function may be specified by a network and/or system operator during a network initialization phase. Advantageously, the plurality of possible locations of the at least one network proxy comprise candidate locations may be specified by the network and/or system operator during the network planning phase. This allows for an efficient definition of functional requirements and topological constraints in each individual industrial automation system. Particularly, the simulated network usage scenarios may be derived from possible intents to be fulfilled by the network and/or from network events randomly generated by a scenario generator.

According to a further detailed embodiment of the present invention, for handling network intents during a network operation phase, at least
- an automation device to be provided with control commands from redundant control applications,
- a type of the redundant control applications,
- a requested data rate, and
- a maximum delay
are specified within an intent request by a network and/or system operator. Preferably, the intent request is processed by means of the artificial intelligence model to solve the optimization function. Advantageously, solving the optimization function by means of the artificial intelligence model yields an assignment of the at least one network proxy to redundant control applications.

Moreover, solving the optimization function may additionally yield
- at least one path from the at least one network proxy to the at least one automation device,
- an allocation of the redundant control applications to the hosts, and
- paths from the at least one network proxy to the hosts in which the redundant control applications are executed.

According to yet another preferred embodiment, solving the optimization function further yields a configuration to be deployed on the at least one network proxy, and configurations to be deployed on network devices along the paths from the network proxy to the automation devices and/or hosts. Thus, placing the at least one network proxy, assigning the control applications, and configuring the network can be consistently automated which results in an optimized usage of resources and an improved network performance. Furthermore, aggregating the control commands from redundant control applications into resulting control messages is preferably performed by means of a consensus algorithm, particularly by selecting a control command with the highest number of repetitions among all control commands.

According to another aspect of the present invention, a network management system for executing a method described above is provided. The network management system is designed to be used for an industrial automation system comprising a network in which time-critical data is transmitted. The industrial automation system comprises a plurality of automation devices, a plurality of hosts providing, by means of software containers each running in a runtime environment or by means of a virtual machine, a plurality of redundant control applications generating control commands to be executed by associated automation devices, and at least one network proxy. The network proxy aggregates control commands from redundant control applications into resulting control messages and transmits the control messages to the automation devices via the network. Moreover, wherein the network proxy receives status messages from the automation devices in response to the control messages, multiplexes the status messages, and forwards duplicates thereof to the associated redundant control applications.

The network management system according to the present invention is configured for simulating, for a plurality of possible locations of the at least one network proxy within the network and for a plurality of network usage scenarios, delays and/or path costs occurring when transmitting said control and status messages. Furthermore, the network management system is configured for selecting, for placing the at least one network proxy, one of the plurality of locations providing for optimal delays, paths costs and/or a combination thereof in the plurality of network usage scenarios. Finally, the network management system is configured for assigning an execution of the control applications to selected available hosts in the network depending on the delays, paths costs and/or the combination thereof.

The present invention will be explained in more detail with reference to exemplary embodiments illustrated in the attached drawing, in which
- Figure 1: shows an industrial automation system comprising a plurality of hosts providing control applications, a network with a plurality of network devices, and at least one automation device to be controlled,
- Figure 2: shows a sequence diagram for initializing an artificial intelligence model for assigning an execution of the control applications to available hosts, and determining optimal delays and paths costs in the network,
- Figure 3: shows a sequence diagram for training the artificial intelligence model,
- Figure 4: shows a sequence diagram for processing a request to deploy a network proxy connecting the automation device to redundant control applications,
- Figure 5: shows a sequence diagram for configuring a server pool comprising a plurality of hosts,
- Figure 6: shows a sequence diagram for configuring the network proxy,
- Figure 7: shows a sequence diagram for configuring network paths from the network proxy,
- Figure 8: shows a sequence diagram for configuring the automation device.

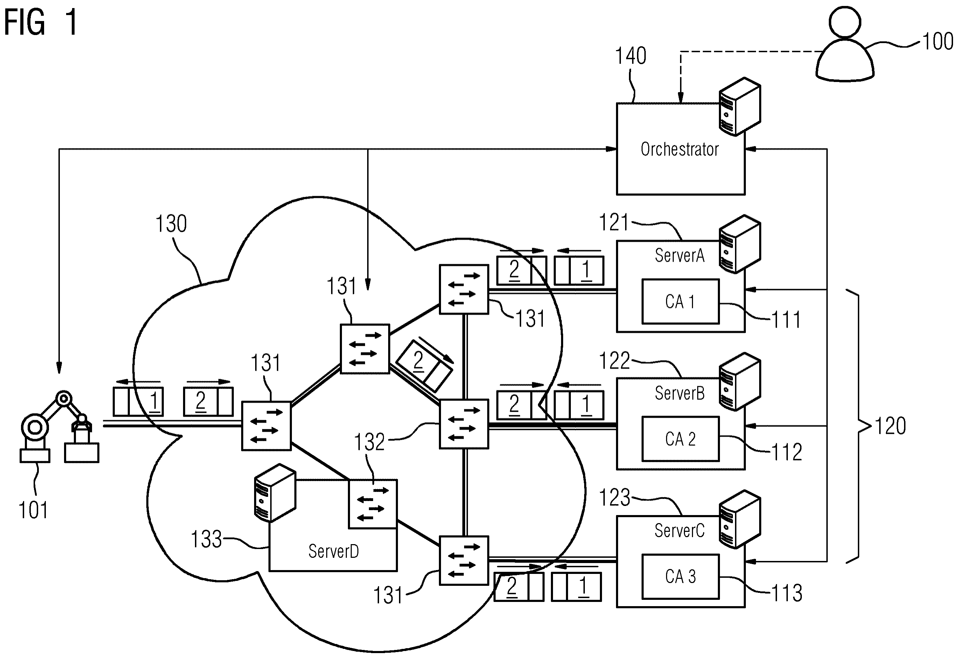

The automation system shown in Figure 1 comprises a server pool 120 with a plurality of hosts 121-123 providing control applications 111-113, a network 130 with a plurality of network devices 131-133, and at least one automation device 101 to be controlled. The hosts 121-123 are designed and configured to provide the control applications 111-113 by means of software containers which are loadable into and executable in a container runtime environment installed on a host operating system. Alternatively, the control applications 111-113 may be provided by means of one or more virtual machines (VMs). In the present exemplary embodiment, the control applications 111-113 implement control and monitoring functions, or other time-critical services. Particularly, each control application 111-113 can implement a virtual programmable logic controller (vPLC).

The automation device 101 depicted in Figure 1 may be an IO device (input/output). IO devices are used for exchanging actuating variables and measured values between programmable logic controllers and machines or devices, e.g. a robot, controlled by means of a programmable logic controller. Programmable logic controllers are designed and configured particularly for determining actuating variables from measured values and for issuing control commands. Interfaces between the IO devices and the machines or devices can be analogue or digital. In industrial automation systems and electric power systems, automation or field devices may also be implemented by sensors or sampling units, e.g. attached to high voltage lines, with reduced complexity or simple electronic circuitry. Such devices typically exchange information via assigned IO controllers.

A control application 111-113 may also implement functions of a monitoring and control station. Monitoring and control stations are, e.g., used for visualizing process control data, actuating variables and measured values which are processed or collected, respectively by programmable logic controllers, IO devices and sensors. Usually, a monitoring and control station comprise at least a graphical user interface, an input device, a processor, and a communication module. These elements of a monitoring and control station may be provided by one of the hosts 121-123 in which the respective control application implementing a monitoring and control station is running.

Each of the network devices 131-133 is designed to forward datagrams within the network 130, especially between (virtual) programmable logic controllers, IO devices or a monitoring and control station and may be assigned to an orchestrator 140 or a network controller controlling forwarding functions of assigned network devices. In the present embodiment, the network devices 131-133 are designed for transmitting control frames according to a real-time and/or time-sensitive networking protocol, e.g. PROFINET, EtherCAT, EtherNet/IP, or TSN. In the present embodiment, the network 130 comprises switches 131 forwarding Ethernet frames with control messages 1 or status messages 2, and network proxies 132 for aggregating the control messages 1 and multiplexing the status messages 2. This network proxies 132 may be implemented on programmable in-network devices, e.g., using P4 language, SmartNICs, or as high-performance containers or virtual machines running on a server 133, ensuring fast data exchange.

The control applications 111-113 are running redundantly to generate control commands to be executed by an associated automation device, such as the IO device 101. The network proxies 132 aggregate control commands from redundant control applications into resulting control messages 1 and transmit the control messages 1 to the respective automation devices via the network 130. In turn, the network proxies 132 multiplex the status messages 2 received from automation devices, such as the IO device 101, in response to the control messages 1, and forward duplicates thereof to the associated redundant control applications 111-113.

In the present embodiment, the control applications 111-113, the network devices 131-133, and the IO device 101 are monitored and configured by means of the orchestrator 140. Particularly, the orchestrator 140 detects a creation, deletion or modification of software containers providing the control applications 111-113 and registers the software containers with their respective execution status. The creation, deletion or modification of the software containers in each case comprises an allocation or release of resources in the respective host 121-123 having an installed container runtime environment. More specifically, the orchestrator 140 is designed to be provided with intents and requirements to be fulfilled by the control applications 111-113 and the network 130 as requested by a network, system and/or plant operator 100. For doing so, the plant operator 100 submits intent request messages to the orchestrator 140.

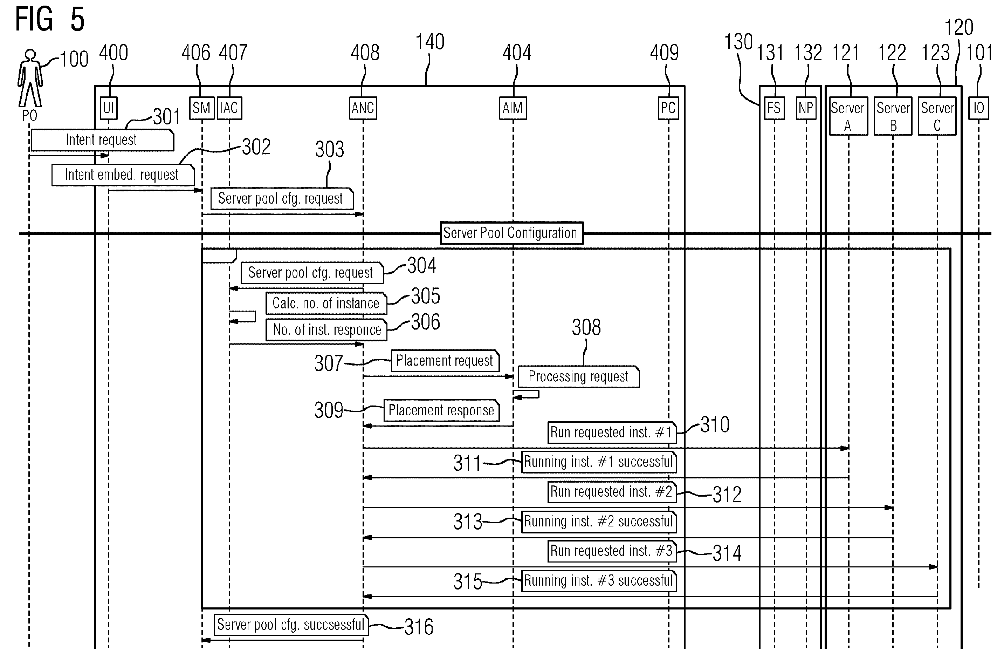

Preferably, the orchestrator 140 comprises the following basic components (see also Figures 5-8):
- User Interface (Ul) 400,
- Service Manager (SM) 406,
- Application and Network Controller (ANC) 408,
- Control Application Instance Availability Component (IAC) 407,
- Proxy Configurator (PC) 409.

The User Interface (UI) of the orchestrator 140 may provide interfaces/APIs, e.g., web, or REST to the plant operator 100 for receiving the intent request messages. Also, the User Interface (Ul) may forward this information to the other components of the orchestrator 140 as well as showing system status/alert/events to the plant operator 100. The Service Manager (SM) of the orchestrator 140 may coordinate steps between the components of the orchestrator to embed the intents and/or requirements into the intent request message. It may have interfaces/APIs with the User Interface (Ul), the Application and Network Controller (ANC), and other components of orchestrator 140.

The Application and Network Controller (ANC) of the orchestrator 140 may orchestrate and configure the IO device 101, the server pool 120 and the network devices 131-133 based on the intents and requirements specified by the plant operator 100. In detail, it may perform the following functionalities:
- Server Pool Configuration,
- Network Configuration,
- Field Device Configuration.

### Server Pool Configuration

The Application and Network Controller (ANC) may create a pre-defined number of instances of the control applications 111-113 in the server pool 120. To provide high-availability, it may create multiple identical replicas of the control application 111-113 as active-passive redundancy. This means that, only one instance of the control applications 111-113 is active at a time per automation or field device, whereas the other instances remain passive. In case of failure, one of the passive instances will take over control.

### Network Configuration

The Application and Network Controller (ANC) may configure the network 130 to provide connectivity between control applications 111-113 and automation or field devices. That is, if necessary, network devices 131-133 or network proxies 132, respectively are configured to establish connectivity between automation or field devices on the one hand and containers or virtual machines hosting control applications 111-113 on the other hand.

### Field Device Configuration

The field device configuration may comprise network configuration on automation or field devices, e.g., the IO device 101, to establish connectivity to the network 130, particularly to the network proxies 132. By doing so, the connectivity between automation or field devices and instances of the control applications 111-113 is established.

The Control Application Instance Availability Component (IAC) of the orchestrator 140 may determine, based on availability requirements of the intent specified by the plant operator 100, how many instances of a control application 111-113 must be run in parallel in the server pool 120 to fulfill the requirements. The Control Application Instance Availability Component (IAC) may have an interface to the Application and Network Controller (ANC). To provide high availability of the control applications 111-113, the Application and Network Controller (ANC) may create multiple identical instances of the respective control application 111-113, either by means of virtual machines or containers. All created instances may keep their own state, and control automation or field devices at the same time based on an identical control logic. The instances may not be aware of the existence of other instances, and the controlled field automation or devices only receive one aggregated input from all redundant instances.

The Proxy Configurator (PC) of the orchestrator 140 may configure the network proxies 132 on a path associated with a specified intent based on output from the Control Application Instance Availability Component (IAC) and the Application and Network Controller (ANC). More specifically, the Proxy Configurator (PC) may configure an exact number of frame or packet replications that a network proxy 132 must do. Moreover, the Proxy Configurator (PC) may configure to what addresses the network proxies 132 should forward replicated status messages 2.

For determining locations of the network proxies 132 within a topology of the network 130, and for finding a path that connecting redundant control applications 111-113 to an IO device 101 via one or more network proxies 132, delays and/or path costs occurring when transmitting the control messages 1 and status messages 2 are simulated by the orchestrator 140 for a plurality of possible locations of the at least one network proxy 132 and for a plurality of network usage scenarios. For placing the at least one network proxy 132, one of the plurality of locations providing for optimal delays, paths costs and/or a combination thereof in the plurality of network usage scenarios is selected by the orchestrator 140. Finally, an execution of the redundant control applications 111-113 or instances, respectively is assigned to selected available hosts 121-123 in the network 130 depending on the delays, paths costs and/or the combination thereof.

In the present embodiment, a digital twin of the network 130 will be generated during a network planning phase, wherein the delays and/or path costs are simulated for the plurality of possible locations of the at least one network proxy and the plurality of network usage scenarios by means of the digital twin. Accordingly, the at least one network proxy 132 will be placed at the selected location during the network planning phase. For assigning the execution of the control applications 111-113 to available hosts 121-123, the optimal delays, paths costs and/or the combination thereof will be determined by means of an artificial intelligence model. The artificial intelligence model is preferably derived from solving an optimization function for the delays and/or paths costs in a plurality of simulated network usage scenarios. The simulated network usage scenarios comprise providing predetermined control applications 111-113 by predetermined hosts 121-123 arranged at predetermined locations in the network. For handling network intents during a network operation phase, at least
- an automation or field device 101 to be provided with control commands from redundant control applications 111-113,
- a type of the redundant control applications,
- a requested data rate, and
- a maximum delay
are specified within an intent request by the plant operator 100. The intent request is processed by means of the artificial intelligence model to solve the optimization function.

Solving the optimization function by means of the artificial intelligence model yields an assignment of the at least one network proxy 132 to redundant control applications 111-113. Further, solving the optimization function also yields at least one path from the at least one network proxy 132 to the at least one automation or field device 101, an allocation of the redundant control applications 111-113 to the hosts 121-123, and paths from the at least one network proxy 132 to the hosts 121-123 in which the redundant control applications 111-113 are executed. Moreover, solving the optimization function further yields a configuration to be deployed on the at least one network proxy 132, and configurations to be deployed on network devices 131 along the paths from the network proxy 132 to the automation or devices 101 and to the hosts 121-123.

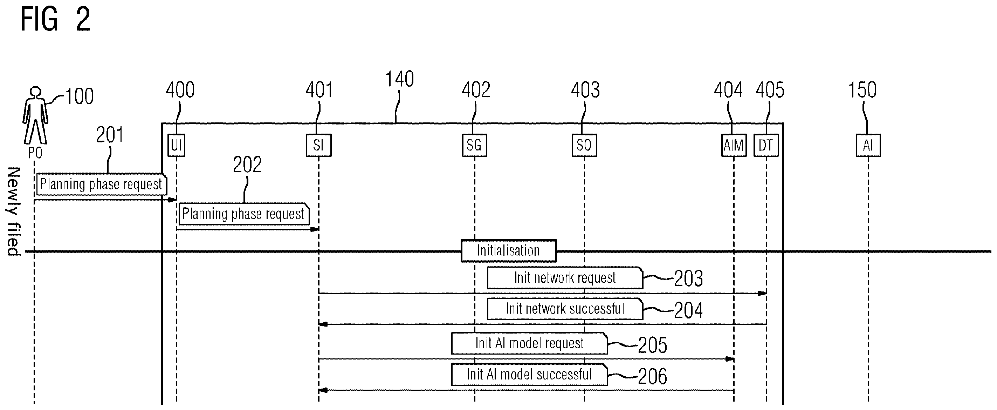

Placing network proxies 132 within the topology of the network, and assigning redundant control applications 111-113 or instances, respectively to available hosts 121-123 and to automation or field devices 101 to be controlled will be described in more detail hereinafter. For achieving these objectives, the following additional components of the orchestrator 140 will be used (see also Figure 2-5):
- Artificial Intelligence Module (AIM) 404,
- Simulator (SI) 401,
- Scenario Generator (SG) 402,
- Solver (SO) 403,
- Digital Twin (DT) 405.

The Artificial Intelligence Module (AIM) trains and holds an AI model (AI) that solves above optimization function. This AI model (Al) can be working with different objective function e.g., minimizing latency, minimizing network costs, or a combination of them. The optimization function can be defined by the plant operator 100 at the beginning of the network planning phase.

The Simulator (SI) is responsible for simulating scenarios that questions in the optimization function need to be solved for. The Simulator (SI) contains a simulated network that runs a simulated model of the network 130 and may consider decisions made by the orchestrator 140 as to the optimization function when simulating the scenarios. Results of these simulations will be a set of data points for the Artificial Intelligence Module (AIM) to train and improve the AI model (Al).

The Scenario Generator (SG) generates new scenarios to be simulated, to further generate new and varied data that could improve the AI model (Al) held by the Artificial Intelligence Module (AIM). Random scenarios make the AI model (Al) to be more complete, have less bias, and more accuracy. Some manual scenarios can be also added by the plant operator 100 to the Scenario Generator (SG). This can ensure that the AI model (Al) covers all necessary and important scenarios during a training period.

The Solver (SO) solves above optimization function and may be implemented by means of an optimization solver, such as Gurobi (https://www.gurobi.com/solutions/gurobi-optimizer/) or CPLEX (https://www.ibm.com/products/ilog-cplex-optimization-studio/cplex-optimizer), that receives a mathematical optimization model and solves it by finding the optimal values for decision variables.

The Digital Twin (DT) runs a digital twin of the network 130 and tests each solution of the optimization function to find out if it works in the network 130 or not, and/or if it is compatible with intent requirements. This is important to ensure that an AI model (Al) is developed in a reliable manner.

### Network Planning Phase

During this phase, network planning will be done. Particularly, the network 130 will be planned, resources will be bootstrapped, and initial resource allocation decisions will be made. Besides, the AI model (Al) 150 will be trained in this phase, and the network proxies 132 will be placed within the topology of the network 130.

According to the sequence diagram for initializing the AI model (Al) 150 shown in Figure 2, the plant operator (PO) 100 interacts with the User Interface (Ul) 400 of the orchestrator 140. In step 201, the User Interface (Ul) 400 receives a "Planning phase request" message which includes input parameters from the plant operator 100. These input parameters may comprise network topology, server pool details, such as location of servers, their resource capacities, IO device locations, candidate locations for network proxy deployment, and/or intent requirement sets. Also, an objective optimization function is included in the "Planning phase request" message by the plant operator 100. The objective optimization function indicates a goal of a network management model, e.g., minimizing deployment cost. These parameters are important to train the AI model (Al) 150 accurately.

The User Interface (Ul) forwards the "Planning phase request" to the Simulator (SI) 401 running a simulation tool that is built based on input from the plant operator 100 (step 202). The Simulator (SI) 401 can also prepare a baseline for creating problems and/or optimization models that will be dealt with by the Solver (SO) 403. Further, the Simulator (SI) 401 initiates a process of initializing the Digital Twin (DT) 405 by sending an "Init network request" message to it (step 203). The Digital Twin (DT) 405 will then generate a digital twin of the network 130 which can be used later to test calculated solutions before pushing them into a productive network. Besides, the Digital Twin (DT) 405 responds positively by sending an "Init network successful" message back to the Simulator (SI) 401 (step 204). After that, in step 205, the Simulator (SI) 401 requests an initialization of the AI model (Al) 150 from the Artificial Intelligence Module (AIM) 404. Then, the Artificial Intelligence Module (AIM) 404 successfully initializes using the input parameters from the plant operator 100, e.g., objective function, and confirms it by sending an "Init AI model successful" message back to the Simulator (SI) 401 (step 206).

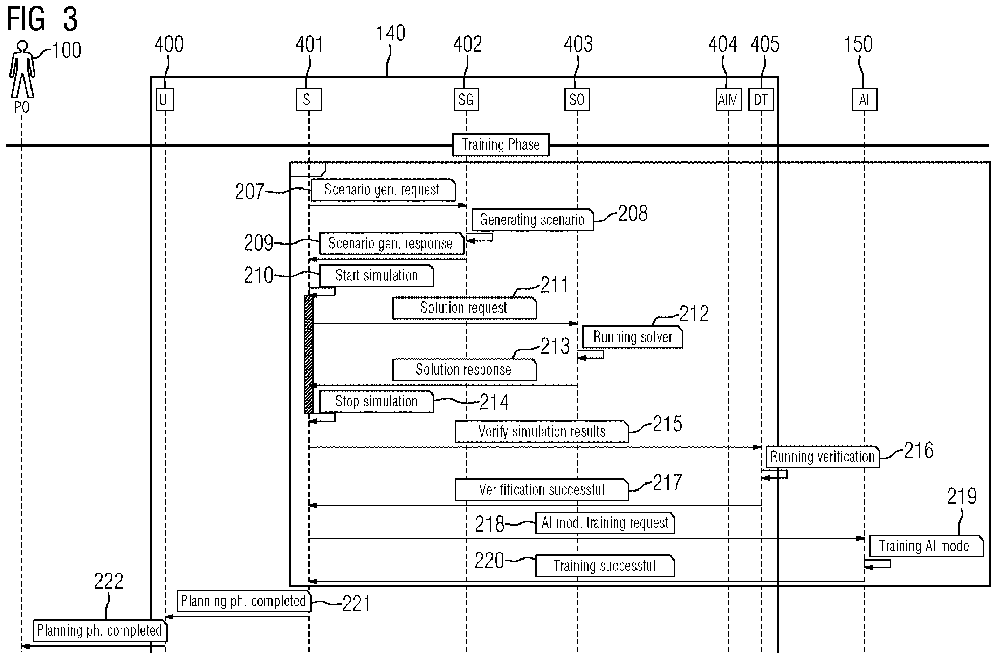

According to the sequence diagram for training the AI model (Al) 150 shown in Figure 3, which may be carried out in a loop, the Simulator (SI) 401 requests a scenario generation from the Scenario Generator (SG) 402 (step 207). This scenario can be one or a set of intents that needs to be embedded into a simulation of the network 130. Then, in step 208, the Scenario Generator (SG) 402 generates a scenario. When doing so, the Scenario Generator (SG) 402 should provide various scenarios with different properties and requirements; such that enough data could be generated for training the AI model (Al) 150. Particularly, the Scenario Generator (SG) 402 may even have a scenario generation model as well. Subsequently, the Scenario Generator (SG) 402 sends the generated scenario to the Simulator (SI) 401 (step 209). After that, the Simulator (SI) 401 starts simulating the generated scenario (step 210). For doing so, parameters as well as intent request and requirements are set up in the Simulator (SI) 401. Moreover, in step 211, the Simulator (SI) 401 requests a solution of the optimization function for the generated scenario from the Solver (SO) 403.

The Solver (SO) 403 then processes the optimization function, e.g., by means of optimization solvers, such as Gurobi or CPlex as mentioned above, or by running different metaheuristic, heuristic or approximation algorithms to find a solution accordingly (step 212). Subsequently, in step 213, the Solver (SO) 403 sends back a "Solution response" message to the Simulator (SI) 401. The Simulator (SI) 401 takes the solution from Solver (SO) 403 and finishes the simulation (step 214). Before using data from the solution for training the AI model (Al) 150, the Simulator (SI) 401 requests the Digital Twin (DT) 405 to verify the results of the simulation (step 215). In response to this request, the Digital Twin (DT) 405 performs a verification, e.g., as to validity of requirements, or connectivity (step 216). If the verification has been successful, the Digital Twin (DT) 405 sends a "Verification successful" message to the Simulator (SI) 401 according to step 217.

Then, the Simulator (SI) 401 requests the AI Model (Al) 150 to train using the data gathered by the Simulator (SI) 401 (step 218). According to step 219, the AI Model (Al) 150 undergoes training, and then confirms a completion of the training by sending a "Training successful" message to the Simulator (SI) 401 (step 220). In turn, the Simulator (SI) 401 informs the User Interface (Ul) 400 that the network planning phase is completed by sending a "Planning phase completed" message (step 221). Finally, the User Interface (Ul) 400 notifies the plant Operator 100 accordingly in step 222 that the network planning phase is completed.

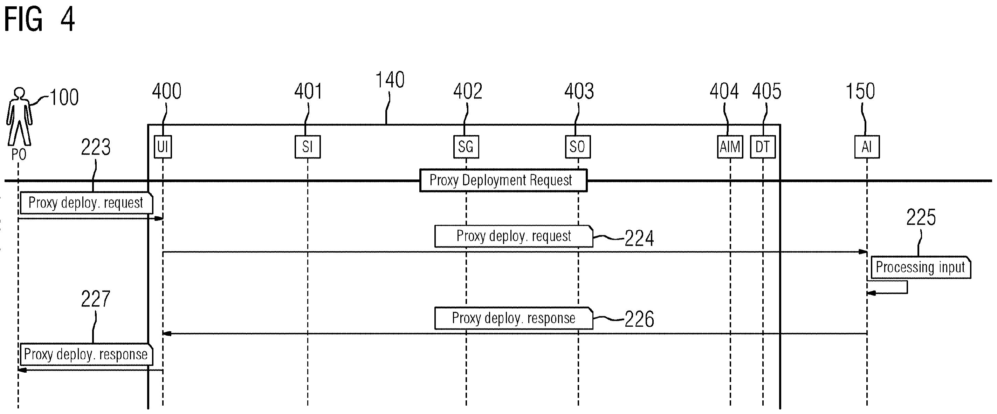

According to the sequence diagram for processing a request to deploy a network proxy connecting the IO device 101 to redundant control applications 111-113 shown in Figure 4, the Plant Operator starts a proxy deployment in step 223 by inputting a proxy deployment request through the User Interface (Ul) 400. In turn, the User Interface (Ul) 400 sends a "Proxy deployment request" message to the Al model (Al) 150. The Al model (Al) 150 processes this by solving the optimization function based on the trained data to determine the location of the network proxy 132 within the topology of the network 130 (step 225). Then, the Al Model (Al) 150 sends a "Proxy deployment response" message to the User Interface (Ul) 400 according to step 226. This message includes the number of necessary network proxies 132 in the network 130, and the location of them with the topology of the network 130. Finally, the User Interface (Ul) 400 presents the proxy deployment response to the plant operator (step 227).

### Network Operation Phase

During this phase, the network starts to operate, and intents specified by the plant operator 100 will be considered to assign redundant control applications 111-113 or instances, respectively to available hosts 121-123 and to automation or field devices 101 to be controlled.

According to the sequence diagram for configuring the server pool 120 comprising the plurality of hosts 121-123 shown in Figure 5, first in step 301, the plant operator 100 enters an intent request by means of the User Interface (Ul) 400 of the orchestrator 140. The intent request has a 4-tuple characteristic: (*s*, *t, b, d*) where *s* denotes a source node, e.g., the IO device 101, *t* denotes a control application type, e.g., vPLC type *t, b* denotes a requested data rate, e.g., in Mbps, and *d* stands for end-to-end delay, e.g., in ms. Based on these intent requirements, the orchestrator 140 must find one or more hosts 121-123 in the server pool 120 to host at least two instances of the control application type *t* in form of a container or virtual machine. The User Interface (Ul) 400 sends an "Intent embedding request" message comprising the intent specified by the plant operator 100 to the Service Manager (SM) 406 (step 302) which then communicates with the Application and Network Controller (ANC) 408 to request configuration of the server pool 120 and launch the instances of the control application (step 303).

In step 304, the Application and Network Controller (ANC) 408 communicates with the Control Application Instance Availability Component (IAC) 407 for requesting a calculation of the number of required application instances. The number of instances is increased to ensure the high-availability or redundancy, respectively of the deployment of redundant control applications 111-113. Accordingly, the Control Application Instance Availability Component (IAC) 407 calculates the required number of instances (step 305) and responds to the Application and Network Controller (ANC) 408 with the calculated number of instances (step 306). Subsequently, in step 307, the Application and Network Controller (ANC) 408 sends a "Placement request" message to the Al Module (AIM) 404 to request an allocation of the control applications 111-113 to the hosts 121-123. For determining the allocation, the Al Module (AIM) 404 uses its trained Al model to determine on which hosts 121-123 in the server pool 120 the instances of the control applications 111-113 should be launched when processing the placement request (step 308). After having processed the placement request, the Al Module (AIM) 404 responds to the Application and Network Controller (ANC) 408 with a "Placement response" message comprising the hosts 121-123 where the instances are to be launched, e.g., ServerA 121, ServerB 122, and ServerC 123 (step 309). When doing so, the hosts 121-123 for running the instances are determined jointly with their associated network proxy 132 and network paths.

In the steps 310, 312, and 314, the Application and Network Controller (ANC) 408 requests each the respective hosts 121-123, e.g. ServerA, ServerB, and ServerC, to run a first, second, and third instance of the control application. This may be done through a virtualization interface of the hosts 121-123 in the server pool 120. Accordingly, in steps 311, 313, and 315, the respective hosts 121-123 acknowledge a successful execution of their assigned first, second, or third instance of the control application. Finally, the Application and Network Controller (ANC) 408 informs the Service Manager (SM) 406 by means of a "Server pool configuration successful" message that the server pool 120 has been successfully configured.

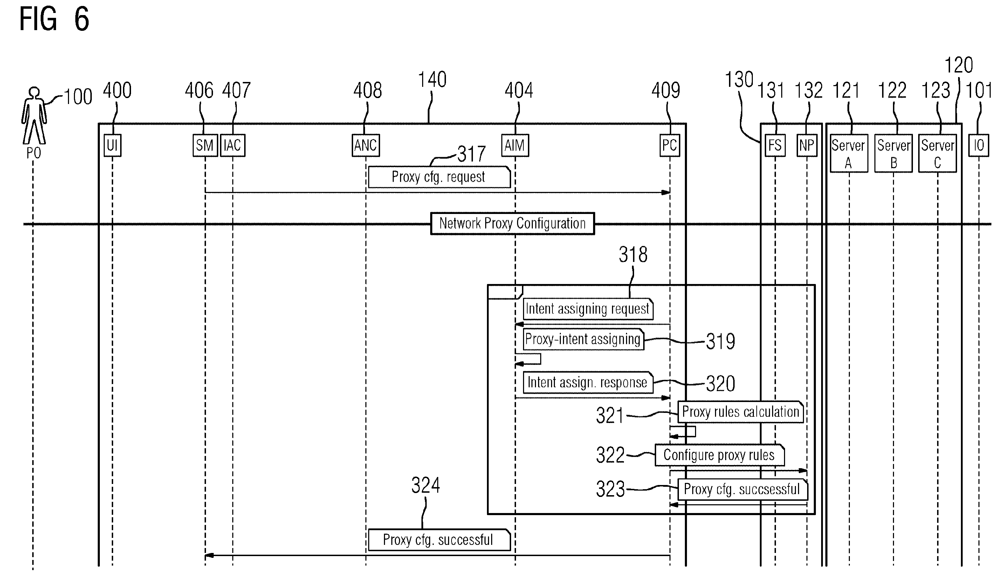

In step 317 of the sequence diagram for configuring the network proxy shown in Figure 6, the Service Manager (SM) 406 sends a "Proxy configuration request" message to the Proxy Configurator (PC) 409 to start the configuration of the network proxy 132 considering the requested intent. Then, the Proxy Configurator (PC) 409 requests the Al Module (AIM) 404 to provide for an assignment of intents to network proxies (step 318). In response to the intent assigning request, the Al Module (AIM) 404 solves above optimization function and determines, by using the trained Al model, through which network proxies 132 the intent should be routed (step 319). After having processed the intent assigning request, the Al Module (AIM) 404 responds to the Proxy Configurator (PC) 409 with one or more selected network proxies 132 to be configured (step 320). Based on this selection, the Proxy Configurator (PC) 409 calculates proxy rules (step 321) and configures the at least one network proxy 132 accordingly (step 322). In response to the configuration, the network proxy 132 confirms the successful configuration of proxy rules to the Proxy Configurator (PC) 409 according to step 323. Finally, the Proxy Configurator (PC) 409 notifies the Service Manager (SM) 406 about the successful proxy configuration (step 324).

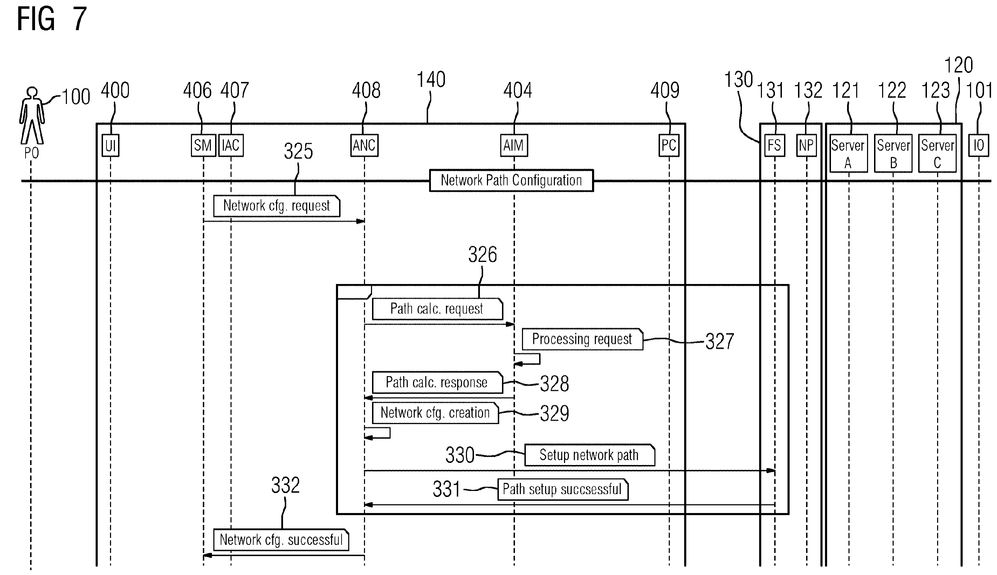

According to the sequence diagram for configuring network paths from the network proxy as depicted in Figure 7, the network paths from the IO device 101 to the network proxy 132, and from the network proxy 132 to the hosts 121-123 providing the instances of the control application are calculated to route network traffic accordingly. First, in step 325, the Service Manager (SM) 406 communicates with the Application and Network Controller (ANC) 408 to request network configuration. In response to this request, the Application and Network Controller (ANC) 408 requests the AI Module (AIM) 404 to determine network paths that connect IO device 101 to the instances of the control application through the network proxy 132 (step 326). The AI Module (AIM) 404 processes the request by calculating the network paths (step 327) and then responds by communicating the calculated network paths to the Application and Network Controller (ANC) 408 (step 328). Based on the calculated network paths, the Application and Network Controller (ANC) 408 creates network configurations, particularly to configure the network 130 as to its forwarding behavior to provide for the intended IO device 101 to instances communication (step 329). After that, the Application and Network Controller (ANC) 408 initiates a setup of the network paths by communicating with the forwarding switches 131 and configures their forwarding behavior (step 330). In turn, the forwarding switches 131 complete the setup of the network paths and confirm the successful setup to the Application and Network Controller (ANC) 408 (step 331). Finally, the Application and Network Controller (ANC) 408 informs the Service Manager (SM) 406 that the network configuration has been successfully concluded by sending a "Network configuration successful" message in step 332.

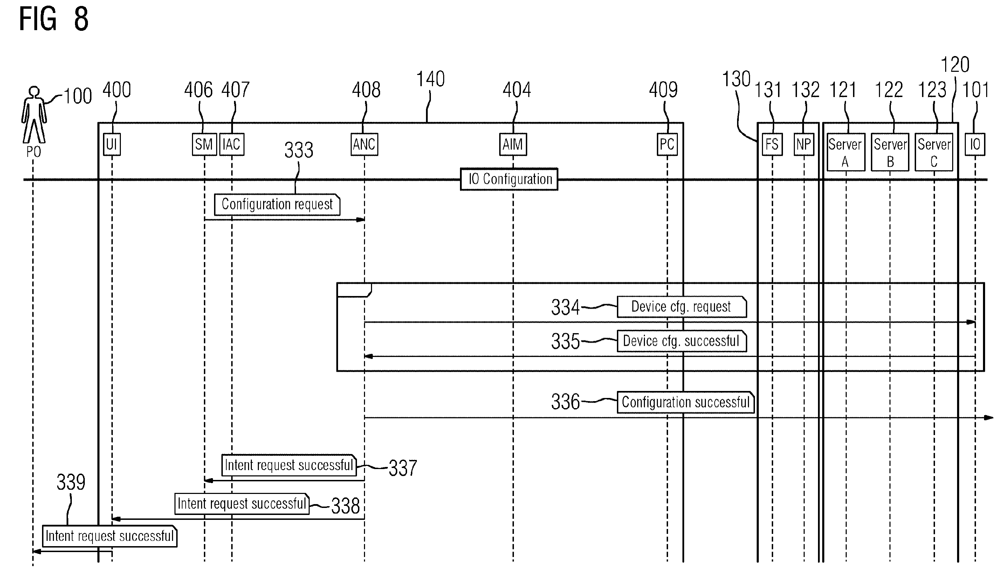

In step 333 of the sequence diagram for configuring the automation or IO device 101, respectively shown in Figure 8, the Service Manager (SM) 406 sends a "Configuration request" message to the Application and Network Controller (ANC) 408 to initiate the configuration of the IO device 101. In response to the configuration request, the Application and Network Controller (ANC) 408 sends a "Device configuration request" message to the IO device 101 to configure the IO device 101 (step 334), particularly by applying settings consistent with the network paths calculated above. If the configuration of the IO device 101 has been successfully concluded, the IO device 101 confirms the successful configuration by sending a "Device configuration successful" message to the Application and Network Controller (ANC) 408 (step 335). After that, the Application and Network Controller (ANC) 408 notifies the AI model of the successful configuration of the IO device 101 (step 336) and sends an "Intent request successful" message to the Service Manager (SM) 406 to communicate a completion of the intent request to the Service Manager (SM) 406 (step 337). The "Intent request successful" message is forwarded to the User Interface (Ul) 400 (step 338). Accordingly, this information about the successful execution of the intent request is presented to the plant operator 100 at the User Interface (UI) 400 (step 339). Thus, the network 130 can start to operate and thereby fulfill the intent specified by the plant operator 100.

## Claims

1. Method of transmitting time-critical data within an industrial automation system, the method comprising:
- providing, by means of software containers each running in a runtime environment or by means of a virtual machine, a plurality of redundant control applications (111-113) generating control commands to be executed by associated automation devices (101),
- aggregating, by at least one network proxy (132), control commands from redundant control applications (111-113) into resulting control messages (1), and transmitting the control messages to the automation devices (101) via a network (130) of the industrial automation system,
- in response to the control messages (1), receiving, by the at least one network proxy (132), status messages (2) from the automation devices (101), multiplexing the status messages, and forwarding duplicates thereof to the associated redundant control applications (111-113),
**characterized by**:
- simulating, for a plurality of possible locations of the at least one network proxy (132) within the network (130) and for a plurality of network usage scenarios, delays and/or path costs occurring when transmitting said control (1) and status messages (2),
- selecting, for placing the at least one network proxy (132), one of the plurality of locations providing for optimal delays, paths costs and/or a combination thereof in the plurality of network usage scenarios,
- assigning an execution of the control applications (111-113) to selected available hosts (121-123) in the network (130) depending on the delays, paths costs and/or the combination thereof.

2. Method according to claim 1,
wherein a digital twin (405) of the network (130) is generated during a network planning phase, wherein the delays and/or path costs are simulated for the plurality of possible locations of the at least one network proxy (132) and the plurality of network usage scenarios by means of the digital twin, and wherein the at least one network proxy is placed at the selected location during the network planning phase.

3. Method according to claim 2,
wherein the digital twin (405) of the network is generated by means of a network topology scan and querying attributes and/or types of network devices (131-133) detected during the network topology scan.

4. Method according to one of the claims 2 or 3,
wherein the digital twin (405) is used for checking whether requirements from specified network intents are satisfied and/or for verifying network simulation results.

5. Method according to one of the claims 1 to 4,
wherein, for assigning the execution of the control applications (111-113) to available hosts (121-123), the optimal delays, paths costs and/or the combination thereof are/is determined by means of an artificial intelligence model (150), wherein the artificial intelligence model is derived from solving an optimization function for the delays and/or paths costs in a plurality of simulated network usage scenarios, and wherein the simulated network usage scenarios comprise providing predetermined control applications by predetermined hosts arranged at predetermined locations in the network.

6. Method according to claim 5,
wherein the wherein the simulated network usage scenarios additionally comprise providing the predetermined control applications (111-113) by the selected hosts (121-123) via predetermined network proxies (132) arranged at predetermined locations in the network.

7. Method according to one of the claims 5 or 6,
wherein the optimization function is specified by a network and/or system operator (100) during a network initialization phase, and wherein the plurality of possible locations of the at least one network proxy (132) comprise candidate locations specified by the network and/or system operator during the network planning phase.

8. Method according to one of the claims 5 to 7,
wherein the simulated network usage scenarios are derived from possible intents to be fulfilled by the network (130) and/or from network events randomly generated by a scenario generator (402).

9. Method according to one of the claims 5 to 8,
wherein, for handling network intents during a network operation phase, at least an automation device (101) to be provided with control commands from redundant control applications (111-113), a type of the redundant control applications, a requested data rate, and a maximum delay are specified within an intent request by a network and/or system operator (100), and wherein the intent request is processed by means of the artificial intelligence model (150) to solve the optimization function.

10. Method according to claim 9,
wherein solving the optimization function by means of the artificial intelligence model (150) yields an assignment of the at least one network proxy to redundant control applications.

11. Method according to claim 10,
wherein solving the optimization function yields at least one path from the at least one network proxy (132) to the at least one automation device (101), an allocation of the redundant control applications (111-113) to the hosts (121-123), and paths from the at least one network proxy to the hosts in which the redundant control applications are executed.

12. Method according to one of claim 11,
wherein solving the optimization function further yields a configuration to be deployed on the at least one network proxy (132), and configurations to be deployed on network devices (131-133) along the paths from the network proxy to the automation devices (101) and/or hosts (121-123).

13. Method according to one of the claims 1 to 12,
wherein aggregating the control commands from redundant control applications (111-113) into resulting control messages (1) is performed by means of a consensus algorithm, particularly by selecting a control command with the highest number of repetitions among all control commands.

14. Network management system for an industrial automation system comprising a network in which time-critical data is transmitted, wherein the industrial automation system comprises:
- a plurality of automation devices,
- a plurality of hosts providing, by means of software containers each running in a runtime environment or by means of a virtual machine, a plurality of redundant control applications generating control commands to be executed by associated automation devices,
- at least one network proxy aggregating control commands from redundant control applications into resulting control messages, and transmitting the control messages to the automation devices via the network, wherein the at least one network proxy receives status messages from the automation devices in response to the control messages, multiplexes the status messages, and forwards duplicates thereof to the associated redundant control applications,
the network management system being configured for:
- simulating, for a plurality of possible locations of the at least one network proxy within the network and for a plurality of network usage scenarios, delays and/or path costs occurring when transmitting said control and status messages,
- selecting, for placing the at least one network proxy, one of the plurality of locations providing for optimal delays, paths costs and/or a combination thereof in the plurality of network usage scenarios,
- assigning an execution of the control applications to selected available hosts in the network depending on the delays, paths costs and/or the combination thereof.
